Europäisches Patentamt

European Patent Office

Office européen des brevets

(11) Publication number: **0 219 324**
A2

# (12) EUROPEAN PATENT APPLICATION

(21) Application number: 86307848.1

(22) Date of filing: 10.10.86

(51) Int. Cl.⁴: **F 24 F 13/04**

(30) Priority: 11.10.85 JP 155292/85 U

(43) Date of publication of application:
22.04.87 Bulletin 87/17

(84) Designated Contracting States:
DE FR GB IT SE

(71) Applicant: SANDEN CORPORATION
20 Kotobuki-cho
Isesaki-shi Gunma-ken(JP)

(72) Inventor: Nakazawa, Takeharu
1013-2 Kawai Tamamura-machi
Sawa-gun Gunma 370-11(JP)

(74) Representative: Jackson, Peter Arthur et al,
GILL JENNINGS & EVERY 53-64 Chancery Lane
London WC2A 1HN(GB)

(54) Air distribution mechanism for an automotive air conditioning system.

(57) An air distribution mechanism (20) for an automotive air conditioning system has a duct (21) with an inlet (211), a refrigeration evaporator (7), a heater core (8) and outlets (22,23,24) controlled by dampers (11,12,13). A damper (27) can cooperate with the damper (11) to cause all the cooled air by-passing the heater core through a passage (26) to pass to the outlet (22) without any mixing with warmed air. The damper (27) can also be pivoted upwards or downwards to allow controlled mixing of the cooled and warmed air.

Fig. 3A

EP 0 219 324 A2

Croydon Printing Company Ltd.

0219324

SANDEN CORPORATION                    Ref: 50/3011/02

## AIR DISTRIBUTION MECHANISM FOR AN AUTOMOTIVE AIR CONDITIONING SYSTEM

Generally, automotive air conditioners are provided with an air distribution mechanism including a duct which has air inlet and outlet openings, heat exchangers and a plurality of damper elements to control the temperature and passage of the air.

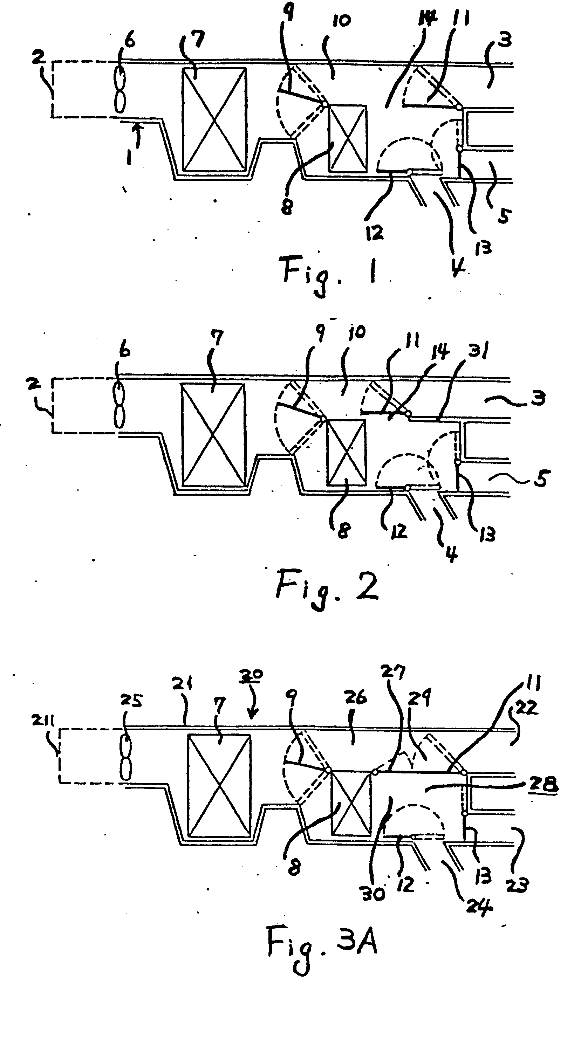

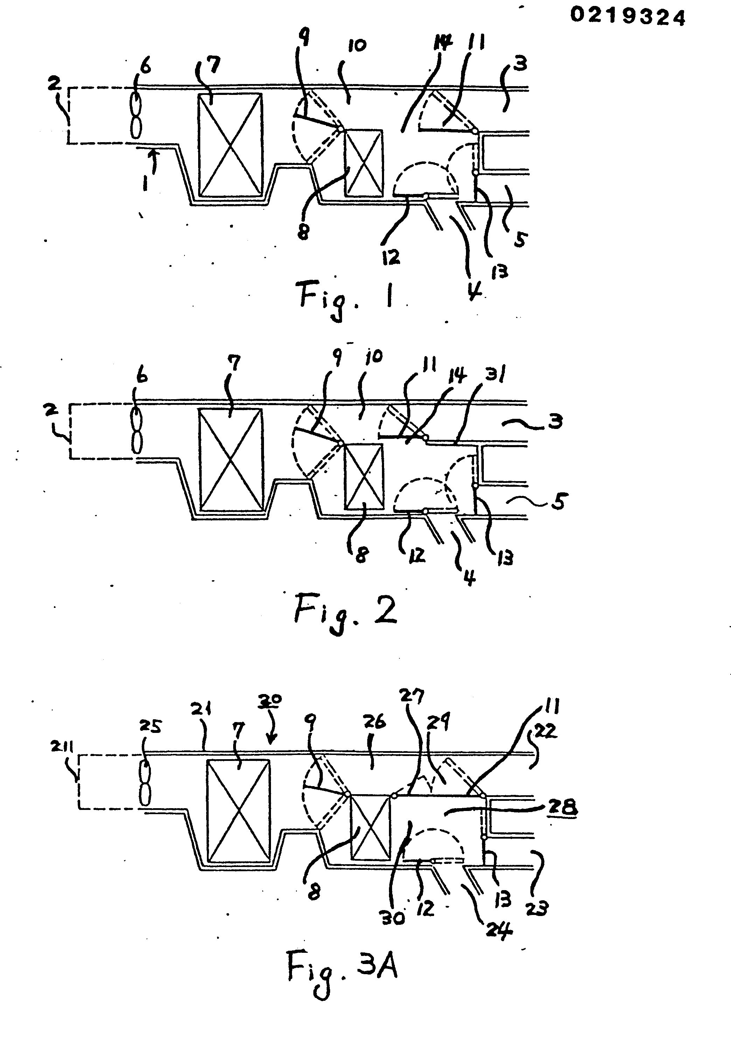

Figure 1 of the accompanying drawings shows a conventional structure.

An air duct 1 has an air inlet opening 2 which communicates with an external space and with a compartment of the automobile through a recirculated air inlet (not shown). The air duct 1 also has a plurality of outlets, such as an upper outlet 3, a lower outlet 4 and a defroster outlet 5, each of which opens into the compartment. The air is drawn into the air duct 1 from the air inlet 2, and flows out into the compartment from the upper outlet 3, the lower outlet 4 and the defroster outlet 5. Normally, the air circulation is forced by a blower device 6 disposed at the air inlet end of the duct.

An evaporator 7, which consists of part of a refrigeration circuit, is disposed in the air duct 1 for cooling air passing therethrough. A heater core 8 is also disposed in the air duct 1 downstream of the evaporator 7 and divides the passageway of the duct 1 into two ways. That is the heater core 8 partly closes the duct 1 but a by-pass passage 10 may be formed in the duct around the heater core for cooled air. The downstream space of the heater core 8 functions as an air mixing chamber 14, because, in the mixture chamber 14, the air passed through the heater core 8 and air passed through the by-pass passage 10 are mixed with one another to adjust the temperature of air flowing out into the compartment through one of the outlets. The relative air inflow volumes to the heater core 8 and by-pass passage 10 are controlled by a first damper 9 disposed at the upstream side of the heater core 8. The opening and closing of the upper outlet 3 is controlled by a second damper 11. The opening and closing of the lower outlet 4 is controlled by a third damper 12. Also, the opening and closing of the defroster outlet 5 is controlled by a fourth damper 13.

In the above described automotive air conditioning system, during a bi-level mode, i.e., when cool air flows out from the upper outlet 3 and warm air flows out from the lower outlet 4, the flows of air from the upper and lower outlets 3, 4 are normally mixtures of both of cooled and warmed air. This is because the second damper 11 is not disposed in the duct 1 to divide the mixing chamber 14 into two passages when the second damper 11 is positioned to open the upper outlet 3. Therefore, in the bi-level mode, the flows of cooled air and warmed air are not clearly divided from one another. As a result, the temperature differential between cool air flowing into the upper outlet 3 and warm air flowing into the lower outlet 4 is small.

One solution to resolve the above-mentioned disadvantage is clearly to divide the mixing chamber into two passages when the air conditioner is operated in a bi-level mode. As shown in Figure 2, a partition wall 31 of the upper outlet 3 could be extended into the mixing chamber 14 to divide it into two passages upn appropriate positioning of the second damper 11. In this construction, if the air conditioner is operated in a bi-level mode, cooled air passed through the by-pass passage 10 and warmed air passed through the heater core 8 flow their separate ways, and are not mixed with one another.

Therefore, the temperature differential between cool air passing through the upper outlet 3 and warm air passing through the lower outlet 4 is large. However, if the air conditioner is then to be operated in a vent mode, the second damper 11 opens the upper outlet 3 but divides the mixing chamber 14 into two passages, that is cooled air passed through the by-pass passage 10 flows directly out into the compartment through the upper outlet 3 and is not mixed with warmed air passed through heater core 8. Therefore, the temperature of the air flow into the compartment cannot be controlled by mixing cooled and warmed air. The temperature of the air should be controlled by a thermostat.

It is an object of the invention to provide an air distribution mechanism for an automotive air conditioning system in which the temperature control can be easily obtained by mixing cooled and warmed air, even if the passage for the cooled air and warmed air are totally separated during operation in a bi-level mode.

In accordance with the invention, an air distribution mechanism for an automotive air conditioning system, the mechanism comprising an air duct which has an air inlet opening and a plurality of outlets including a first outlet, a defroster outlet and a second outlet; blower means to force air circulation through the duct; an evaporator disposed in the duct; a heater core disposed in the duct downstream of the evaporator; a by-pass passage extending in the duct past the heater core; a first damper disposed upstream of the evaporator so as to control the relative air flows into the heater core and the by-pass passage; a second damper disposed upstream of the first outlet so as to open and close the first outlet; and damper means to open and close the defroster outlet and the second outlet; is

- 4 -        0219324

characterised by a bi-level damper disposed downstream of the heater core and capable of cooperating with the second damper in a bi-level mode to separate a cooled air passage, for leading cooled air from the by-pass passage to the first outlet, from a warmed air passage for leading warmed air from the heater core to the second outlet; the bi-level damper also being movable away from the second damper to allow controlled intermixing of the cooled and warmed air.

The invention is explained in more detail with reference to the accompanying drawings, in which:-

Figures 1 and 2 are schematic views of two conventional air distribution mechanisms for an automotive air conditioning system;

Figures 3A to 3D are schematic views of one air distribution mechanism in accordance with the invention illustrating the positions of dampers in each mode of operation; and,

Figure 4 is a schematic view of a second distribution system in accordance with the invention.

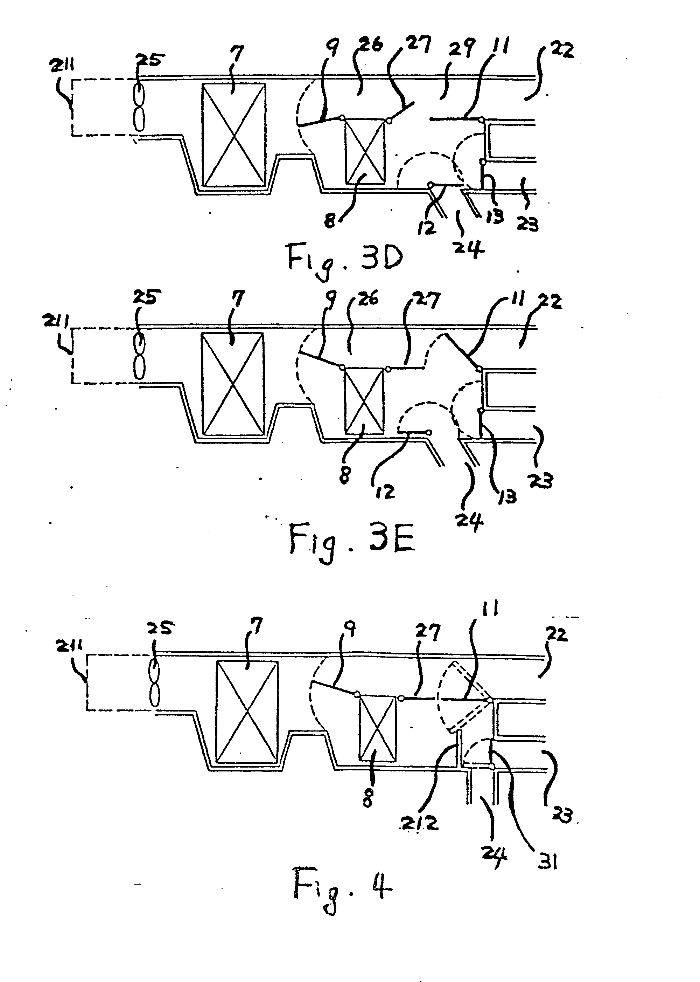

Figure 3A shows an air distribution mechanism 20 for an automotive air conditioning system, the mechanism including an air duct 21 which is provided with an air inlet opening 211, connected to one or more air inlets of the system, and air outlet openings, such as an upper outlet 22, a defroster outlet 23 and a lower outlet 24, to form an air circulation passage. The air inlet opening 211 communicates with the compartment space in the automobile and also external space for the withdrawal of the air circulated within the compartment or the introduction of fresh air. The air circulation may be forced by a blower device 25.

An evaporator 7, which forms part of a refrigeration circuit, for cooling the air, is disposed in the duct 21 fully across the passageway Therefore, the temperature differential between cool air passing through the upper outlet 3 and warm air passing through the lower outlet 4 is large. However, if the air conditioner is then to be operated in a vent mode, the second damper 11 opens the upper outlet 3 but divides the mixing chamber 14 into two passages, that is cooled air passed through the by-pass passage 10 flows directly out into the compartment through the upper outlet 3 and is not mixed with warmed air passed through heater core 8. Therefore, the temperature of the air flow into the compartment cannot be controlled by mixing cooled and warmed air. The temperature of the air should be controlled by a thermostat.

It is an object of the invention to provide an air distribution mechanism for an automotive air conditioning system in which the temperature control can be easily obtained by mixing cooled and warmed air, even if the passage for the cooled air and warmed air are totally separated during operation in a bi-level mode.

In accordance with the invention, an air distribution mechanism for an automotive air conditioning system, the mechanism comprising an air duct which has an air inlet opening and a plurality of outlets including a first outlet, a defroster outlet and a second outlet; blower means to force air circulation through the duct; an evaporator disposed in the duct; a heater core disposed in the duct downstream of the evaporator; a by-pass passage extending in the duct past the heater core; a first damper disposed upstream of the evaporator so as to control the relative air flows into the heater core and the by-pass passage; a second damper disposed upstream of the first outlet so as to open and close the first outlet; and damper means to open and close the defroster outlet and the second outlet; is characterised by a bi-level damper disposed downstream of the heater core and capable of cooperating with the second damper in a bi-level mode to separate a cooled air passage, for leading cooled air from the by-pass passage to the first outlet, from a warmed air passage for leading warmed air from the heater core to the second outlet; the bi-level damper also being movable away from the second damper to allow controlled intermixing of the cooled and warmed air.

The invention is explained in more detail with reference to the accompanying drawings, in which:-

Figures 1 and 2 are schematic views of two conventional air distribution mechanisms for an automotive air conditioning system;

Figures 3A to 3D are schematic views of one air distribution mechanism in accordance with the invention illustrating the positions of dampers in each mode of operation; and,

Figure 4 is a schematic view of a second distribution system in accordance with the invention.

Figure 3A shows an air distribution mechanism 20 for an automotive air conditioning system, the mechanism including an air duct 21 which is provided with an air inlet opening 211, connected to one or more air inlets of the system, and air outlet openings, such as an upper outlet 22, a defroster outlet 23 and a lower outlet 24, to form an air circulation passage. The air inlet opening 211 communicates with the compartment space in the automobile and also external space for the withdrawal of the air circulated within the compartment or the introduction of fresh air. The air circulation may be forced by a blower device 25.

An evaporator 7, which forms part of a refrigeration circuit, for cooling the air, is disposed in the duct 21 fully across the passageway through the duct 21. Inlet air therefore passes through the evaporator 7. A heater core 8 is also disposed in the duct 21 downstream of the evaporator 7 and partly across the passageway through the duct 21. Thus, an air by-pass passage 26 is formed in the duct 21 past the heater core so that cooled air can be passed to downstream of the heater core 8 without passing therethrough. The space on the downstream side of the heater core 8 functions as an air mixing chamber 28, i.e. the warmed air passed through the heater core 8 and the cooled air passed through the by-pass way 26 can be mixed in the mixing chamber 28.

The opening and closing of each of the outlets 22,23,24 is controlled by dampers 11,12,13, respectively. The upper outlet damper 11 extends within the air mixing chamber 28 partly to divide the chamber 28. Also, the amounts of air flowing into the heater core 8 and into the by-pass passage 26 is controlled by a first damper 9, which is disposed on the upstream side of the heater core 8. A bi-level damper 27 is disposed at the downstream side of the heater core 8 adjacent to the upper outlet damper 11. Therefore, the bi-level damper 27 is able to cooperate with the upper outlet damper 11 to divide the air mixture chamber 28 into two passages, of which one forms an upper passage 29 leading on from the by-pass passage 26, and the other forms a lower passage 30 leading from the heater core 8.

Figures 3A to 3E explain the operation of the mechanism. As shown in Figure 3A, in a bi-level mode, the bi-level damper 27 and the upper outlet damper 11 are positioned horizontally to divide the air mixture chamber 28 into the two passages 29,30, the defroster outlet 23 is closed and the lower outlet 24 is open. In this mode, cool air passed through the evaporator 7 and the by-pass passage 26 and warm air passed through the heater core 8 are not mixed with one another. Cool air flows into the upper outlet 22 through the upper passage 29, while warm air flows into the lower outlet 24 through the lower passage 30.

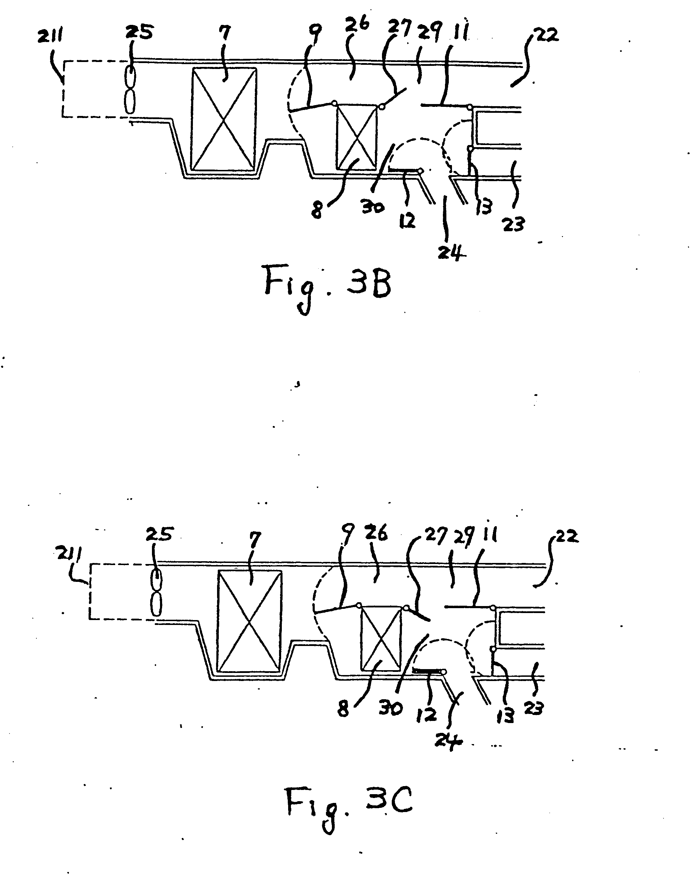

If, from the bi-level mode, the bi-level damper 27 is rotated upwardly away from the damper 11 to provide an opening therebetween, as shown in Figure 3B, some of the warm air passed through the heater core 8 flows into the upper passage 29 through the opening and, warm and cool air are mixed. The temperature of the cooling air flowing out from the upper outlet 22 thus depends on the mixture of cool air and warm air. Since the volume of warm air flowing into the upper passage 29 is controlled by the angle of inclination of the bi-level damper 15, the temperature of the air is similarly controlled by the angle of the bi-level damper 27.

Conversely, if the bi-level damper 15 is rotated downwards to form the opening, as shown in Figure 3C, cool air passed through the upper passage 29 flows into the lower passage 30 and cool and warm air are thus mixed. The temperature of the warm air flowing out from the lower outlet 24 is thus controlled by setting the angle of inclination of the bi-level damper 15, because the volume of cooled air flowing into the lower passage 30 is dependent on the angle of the bi-level damper 15.

As shown in Figure 3D, if the defroster outlet 23 and the lower outlet 24 are closed, and the upper outlet 22 is still open, this mode is a vent mode. In this mode, the air only flows out from the upper outlet 22. The temperature of the out flowing air can be controlled by setting the angle of inclination of the bi-level damper 27. That is, if the bi-level damper 27 is rotated upwards, the opening is formed between the upper passage 29 and lower passage 30 and the temperature of the out flowing air will depend on the mixture of cooled air and warmed air.

Furthermore, if the upper outlet 22 and defroster outlet 23 are closed and the lower outlet 24 only is open, this mode is a foot mode. In this mode, air is only supplied into the compartment through the lower outlet 24. The temperature of the out flowing air is controlled by setting the position of the first damper 9, because the first damper 9 controls the amounts of air flow through the heater core 8 and by-pass passage 10, and the cool and warm air are mixed with one another in the lower passage 30.

Figure 4 shows another air distribution mechanism for an automotive air conditioning system, in which the opening and closing of the defroster and lower outlets 23,24 are controlled by one damper 31. Also, the communication between the mixing chamber 28 and the defroster and lower outlets 23,24 is controlled by the upper outlet damper 11 and a partition wall 212 extending into the mixing chamber 28 from the inner surface of the duct 21. The control of the damper elements will thus be easy.

## CLAIMS

1. An air distribution mechanism (20) for an automotive air conditioning system, the mechanism comprising an air duct (21) which has an air inlet opening (211) and a plurality of outlets including a first outlet (22), a defroster outlet (23) and a second outlet (24); blower means (25) to force air circulation through the duct, an evaporator (7) disposed in the duct; a heater core disposed in the duct downstream of the evaporator; a by-pass passage (26) extending in the duct past the heater core; a first damper (9) disposed upstream of the evaporator so as to control the relative air flows into the heate core and the by-pass passage; a second damper (11) disposed upstream of the first outlet so as to open and close the first outlet; and damper means (12,13,31) to open and close the defroster outlet and the second outlet; characterised by a bi-level damper (27) disposed downstream of the heater core (8) and capable of cooperating with the second damper (11) in a bi-level mode to separate a cooled air passage (29) for leading cooled air from the by-pass passage (26) to the first outlet (22), from a warmed air passage for leading warmed air from the heater core to the second outlet; the bi-level damper (27) also being movable away from the second damper 911) to allow controlled intermixing of the cooled and warmed air.

0219324

Fig. 1

Fig. 2

Fig. 3A

Fig. 1

Fig. 2

Fig. 3A

Fig. 3B

Fig. 3C

Fig. 3D

Fig. 3E

Fig. 4